# EUROPEAN PATENT SPECIFICATION

(11) **EP 3 387 908 B1**
(45) Date of publication and mention of the grant of the patent: **09.08.2023**
(21) Application number: 17166359.4
(22) Date of filing: 12.04.2017
(51) Int. Cl.: A21C 3/06, A21C 9/08

(54) **METHOD AND DEVICE FOR ROLLING UP LAMINATED DOUGH PIECES WITH A SEPARATOR SHEET**
VERFAHREN UND VORRICHTUNG ZUM AUFROLLEN VON BLÄTTERTEIGTEILEN MIT TRENNBLATT
PROCÉDÉ ET DISPOSITIF POUR ENROULER DES MORCEAUX DE PÂTE FEUILLETÉE AVEC UNE FEUILLE DE SÉPARATION

(43) Date of publication of application: 17.10.2018
(73) Proprietor: Radie B.V., 4104 BC Culemborg (NL)
(72) Inventor: VAN BLOKLAND, Johannes Josephus Antonius, 1251 BG Laren (NL)
(74) Representative: IP Maison

(56) References cited:
- EP-A1- 1 366 667
- EP-A1- 2 529 629
- WO-A1-97/02750
- GB-A- 1 242 885
- US-A- 5 078 585

## Description

The present invention relates to a method and device for rolling up laminated dough pieces with a separator sheet.

Dough pieces rolled up with a separator sheet (for instance bakery paper or a foil) are used as a basis for home made pizzas, bottoms for pies, dough for croissants and like products. A roll of a dough piece in a separator sheet is a compact way of storing, packaging and selling the dough, and it has the advantage that the dough is covered with paper on both sides, so that it does not stick together and stays fresh longer than a flat dough piece with only one paper, or even without paper. In order to use the prepared product, the paper is unrolled, and - in case of a pizza - provided with a topping, to be baked on the separator sheet afterwards. When a foil is used, the dough may be baked without the separator sheet.

Dough pieces rolled up with separator sheet are known in general, and so are methods and devices to prepare them. One example is the European Patent EP 2 529 629 in the name of the same applicant. This device works perfectly fine for the dough types it was aimed for, like pizza and croissant dough for instance.

WO 97/02750 A1 discloses another example of a device for preparing a laminated dough piece according to the prior art.

Now a demand has raised for a method and device that can be used for additional dough types, in particular the more fragile laminated ones, like filo dough. It has appeared that the methods and devices according to the art are not suitable, and especially at high speeds required for continuous operation, problems occur.

When rolling up laminated dough types, of which the layers are at least somewhat capable of moving with respect to each other, like filo dough, the upstream ends of the layers that are in the inside bend tend to move in a upstream direction with respect to the layers that are in the outside bend, as a result of the difference in lengths of the inside and outside bends. Since the dough surfaces are not fully smooth and/or the dough may be at least locally sticking, during rolling up, a wave or (moving) bump may occur. When such wave or bump arrives in the rolling chamber, it gets crushed, and the rolled up product is spoiled.

It is a goal of the present invention to propose a method and device for rolling up a laminated dough piece that lacks the aforementioned disadvantages, and to propose an improved laminated dough piece rolled up with a separator sheet.

The invention thereto proposes a device for preparing a laminated dough piece rolled up with separator sheet, comprising:
- a supplier for supplying the laminated dough piece on separator sheet in a transport direction, the laminated dough piece having a length in the transport direction and a width perpendicular to the transport direction;
- a rolling chamber, contiguous to the supplier in the transport direction,characterized in that
- the supplier is configured for transporting at least part of a laminated dough piece on a separator sheet at least over a predetermined distance in a direction oriented upward, towards the rolling chamber wherein the supplier comprises a movable part, movable between a downward orientation and an upward orientation, wherein the movable part is a flap, hingable at its downstream end, and comprising an actuator for moving the movable part between the downward orientation and the upward orientation, further comprising a controller for the actuator, and a sensor for generating a signal that represents a position of a laminated dough piece on the supplier, wherein the controller is configured for moving the movable part from the downward orientation to the upward orientation when the lagging edge of the laminated dough piece has reached the movable part.

In particular, the device is arranged for continuous operation. Thereto, the supplier may be configured for unidirectional movement of laminated dough pieces on separator sheets towards the rolling chamber. The rolling chamber itself may be adapted to discharge rolled up laminated dough pieces with separator sheets at a downstream side with respect to the direction of movement, and comprise a conveyor for further conveying the rolled up laminated dough pieces. The direction upward is seen in in the direction of conveyance of the dough, and the upstream and downstream ends of laminated dough pieces, which are also related to the direction of the conveyance. Downstream is the leading edge, upstream is the lagging edge.

The upward transport of the laminated dough piece during rolling up has the advantage that when a wave or (moving) bump as described above occurs or is likely to occur, due to the upward transport direction, gravity helps such wave either to reach the (upstream) end of the laminated dough piece before it is crushed, or it helps to avoid bumps because the layers of the laminated dough piece can more easily shift or slide mutually due to the upward direction.

Preferably, the upward part is arranged at such distance from the rolling chamber that at least a lagging edge of a laminated dough piece is transported upward when at least the leading edge of the support is in the rolling chamber. In other words, a part of the laminated dough piece travels upward while the laminated dough piece is rolled up. In a practical embodiment, the distance from the location in the rolling chamber where the separator sheet or the laminated dough piece is engaged to the downstream end of the upward part is less than 100 mm, and preferably less than 25 mm, and the length of the upward part is preferably at least 100 mm. This way, laminated dough pieces with lengths between 200 mm and 1000 mm can be treated by the device. In general, the upward part may be arranged directly adjacent to the rolling chamber.

In addition or as an alternative to the upward part, a hoover section or a shaking section may be applied.

This rolling chamber may be defined by at least a subsequent first, second and third endless conveyor, each having a direction of conveyance perpendicular to the direction of conveyance of a previous conveyor, and the transport direction respectively, and together configured for leading an item supplied to the rolling chamber around, such that it encounters itself again. A vacuum roll, arranged upstream from the above mentioned conveyors may further form part of a rolling chamber in a device according to the invention. The rolling chamber as such, its use and its benefits, were described in the European patent EP 2 529 629 already.

According to the invention, the supplier comprises a movable part, which is movable between a flat or downward orientation and the upward orientation. Such configuration allows to change the orientation of the dough during supplying thereof, in particular during supplying of the dough to the rolling clamber. The movement of the supply and therewith the upstream end of the laminated dough piece, which is thereby waved and flattened, leads to elimination of bumps in the laminated dough piece. In particular the effects of sticking of layers of the laminated dough have appeared to be undone by this feature.

The movable part is a flap, hingable at its downstream end. Such flap may be a conveyor or passive part like a plate. In the latter case, it may normally even be arranged downward, and be directed upward only when there is a(n end part of a) laminated dough piece on it or even already when it is approaching. The movement is caused by an actuator for moving the movable part between the flat or downward orientation and the upward orientation is present.

The device also comprises a controller for the actuator, and a sensor for generating a signal that represents a position of a laminated dough piece on the supplier, wherein the controller is configured for moving the movable part from the downward orientation to the upward orientation when the lagging edge of the laminated dough piece has reached the movable part.

The invention also relates to a method for rolling up a laminated dough piece with a separator sheet, comprising the steps of:
- supplying in a transport direction, a laminated dough piece positioned on a separator sheet, the laminated dough piece and the separator sheet having a length and a width wherein a leading edge of the separator sheet exceeds the laminated dough piece at least at a first side, and
- rolling up the at least one side of the separator sheet that exceeds the laminated dough piece, thus forming a cylinder of separator sheet, extending in a width direction of the laminated dough piece, and
- rolling up the separator sheet with the laminated dough piece around the cylinder, wherein
- at least part of the transport direction is upward,characterised in that the method comprises transporting at least part of the laminated dough piece with the separator sheet on a the supplier at least over a predetermined distance in a direction oriented upward, toward a rolling chamber for rolling up the separator sheet with the laminated dough piece and moving a movable part of the supplier from a downward orientation to an upward orientation when a lagging edge of the laminated dough piece has reached the movable part.

An advantage is that the initially formed separator sheet roll provides a desired flexural strength. During production, this flexural strength already offers the advantage that no additional support is required. Such a support may normally be formed by one or more cylindrical parts that are retracted coaxially with the roll after the latter had been rolled up. However, coaxial retraction of such parts requires an extra handling step, and it also requires more width in production environment, which are both considered disadvantageous.

In a preferred embodiment, the method according to the invention further comprises supplying a laminated dough piece on a separator sheet, wherein the separator sheet also exceeds the laminated dough piece at a second side, opposite to the first side, and providing a strip or a number of dots of adhesive along the second side, and fixing the rolled up laminated dough piece and separator sheet by means of the strip or dots of adhesive. The fixation of a lagging side of the separator sheet on the roll thus formed, prevents unrolling of the roll during further handling or processing of the roll, which further guarantees the freshness of the dough to an end user thereof.

According to the invention, rolling the dough and the separator sheet is performed by means of at least three conveyors, each turning the at least one laminated dough piece on separator sheet essentially 90 degrees with respect to the transport direction of the dough. The conveyors form a rolling chamber that forces the separator sheet to turn three quarters round, to encounter itself and to form a roll. The supplier may in general comprise an endless belt, which may in particular be equipped with a perforated cylinder, wherein along at least at a part of the mantle of the cylinder, a vacuum is applicable, and wherein at an edge of the part in a downstream transport direction, a scraper is provided, for scraping the leading edge of the separator sheet from the perforated cylinder.

The supplier may be configured such that it provides laminated dough pieces positioned on separator sheets, wherein the leading edge of the separator sheet exceeds the laminated dough piece at the first side such that it can be rolled at least one turn, before the laminated dough piece reaches the rolling chamber. The device may further comprise an adhesive-dispenser, for dispensing adhesive on an exceeding edge of the separator sheet lagging the laminated dough piece in a transport direction.

The invention will now be elucidated into more detail with reference to the following figures. Herein:
- Figure 1 shows a side view of a a device not being part of the invention;
- Figure 2 shows a side view of an embodiment of the invention;
- Figure 3 shows a side view of the embodiment of the invention; and
- Figure 4 shows a perspective view of the embodiment.

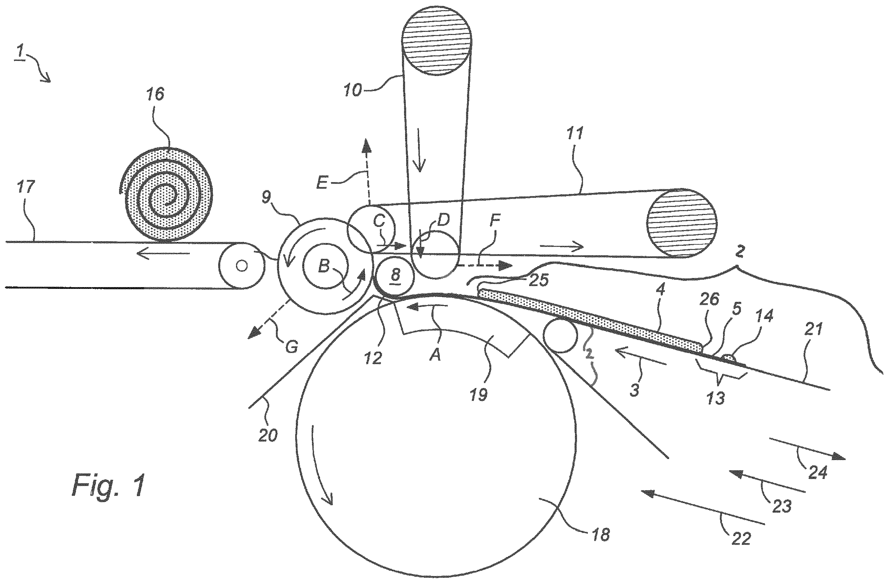

Figure 1 shows a device 1 for preparing a laminated dough piece 4 rolled up with separator sheet 5, comprising a supplier 2 for supplying the laminated dough piece on separator sheet in a transport direction 3, a rolling chamber 8, contiguous to the supplier in the transport direction 3, wherein the supplier 2 is configured for transporting at least part of a laminated dough piece 4 on a separator sheet 5 at least over a predetermined distance in a direction oriented upward 21, towards the rolling chamber 8. Figure 1 further shows some optional features, being a leading strip 12 of the separator sheet 5, encounters three endless conveyors 9, 10, 11, each having a direction of conveyance B, C, D perpendicular to the direction of conveyance of a previous conveyor, and the transport direction A respectively, and together configured for leading an item supplied to the rolling chamber around, such that it encounters itself again. The supplier 2 comprises an also optional perforated cylinder 18, wherein along at least at a part 19 of the mantle of the cylinder, a vacuum is applicable, and wherein at an edge of the part in a downstream transport direction, a scraper 20 is provided, for scraping the leading edge of the separator sheet from the perforated cylinder 18. During the rolling of a separator sheet 4 with a laminated dough piece 5, the second conveyor 10 is moved in the direction F, and the third conveyor 11 is moved in the direction E, in order to increase the volume of the rolling chamber 8. When a roll 16 is finished within the rolling chamber, the first conveyor 9 is moved in the direction G, for opening the chamber and transferring the roll to a transporter 17. Afterwards, all conveyors are brought back to their initial positions for starting a new cycle.

Figure 1 also shows a direction upward 22, a direction of conveyance, which is also a downstream direction 23, an upstream direction 24, as well as a downstream end 25 or leading edge 25 and an upstream end 26 or lagging edge 26 of the dough piece 4.

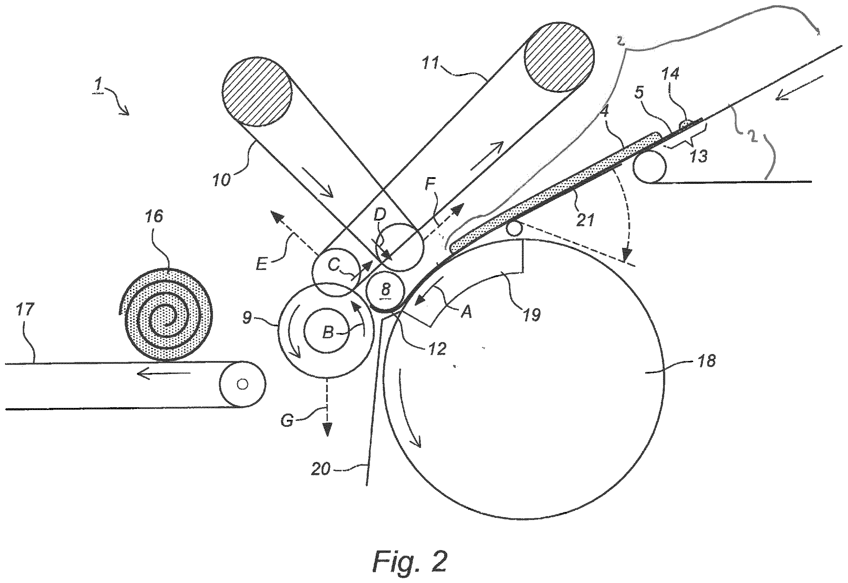

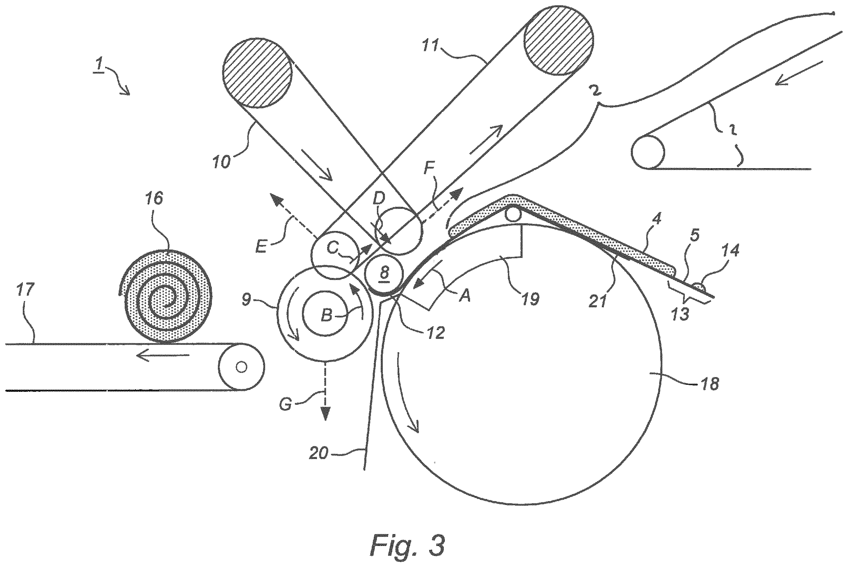

Figure 2 shows an embodiment of the device according to the invention, wherein the same numerals refer to similar parts or features. The embodiment differs from the device from figure 1 in that the supplier is configured for transporting at least part of a laminated dough piece on a separator sheet at least over a predetermined distance in a direction oriented upward, towards the rolling chamber, by means of a movable part 21, movable between a downward orientation (shown) and an upward orientation (shown in figure 3). The movable part is a flap, hingable at its downstream end.

Figure 3 shows the device from figure 2, with the movable part 21 in its upward orientation. The lagging end of the laminated dough piece 4 hangs downward. In particular the movement from the downward orientation to the upward orientation has appeared to lead to smoothing the laminated dough piece 4.

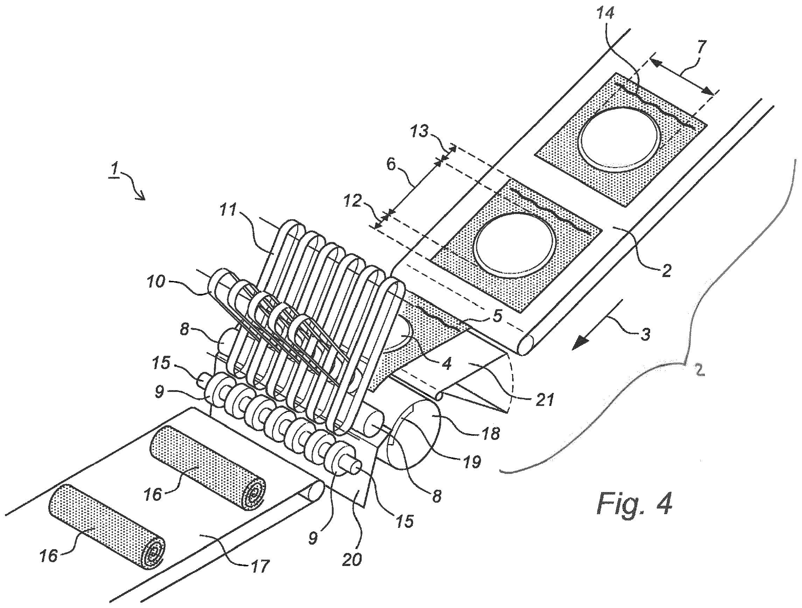

Figure 4 shows a perspective view of the device from figures 2 and 3. In figure 4 it is visible that the separator sheets 5 extend the length of the laminated dough pieces 4 at their leading edges, with respect to the direction of movement 3. The optionally extending strip 12 of separator sheet is first led into the rolling chamber, to form a separator sheet roll. Afterwards the dough is rolled along, and finally, a lagging stroke 13 of the separator sheet is rolled up. In order to fix the thus formed roll, the lagging stroke 13 is provided with adhesive 14, which may be applied in a strip or in separate dots. In figure 4, it is further visible that the first endless conveyor 9 comprises a number of wheels, arranged mutually spaced in a width direction, and rotatable on a common axis of rotation 15 in a width direction. The second endless conveyor 10 comprises a number of endless strings or belts, arranged mutually spaced in a width direction, at positions that fall in between the positions of the wheels of the first endless conveyor 9, and the third transporter 11 comprises a number of endless strings or belts, arranged mutually spaced in a width direction, at positions that fall in between the positions of the endless strings or belts of the second conveyor 10. This way, in motion, a chamber is formed, with "moving walls" that curl up the separator sheet to a cylinder. After being curled up, the rolls 16 of separator sheets 4 with laminated dough pieces 6 are fed away by a transporter 17.

It is also visible that the working surfaces of the conveyors 9, 10, 11, being the locations where interaction with the separator sheet (and indirectly the dough) takes place, have intersecting planes, and thus form a closed chamber. This is the reason that the first endless conveyor 9 is formed by a number of wheels (which may be provided with rubber or the like for increasing friction, and the second endless conveyor 10 comprises a number of endless strings or belts, arranged mutually spaced in a width direction, at positions that fall in between the positions of the wheels of the first conveyor 9. The third conveyor 11 comprises a number of endless strings or belts, arranged mutually spaced in a width direction, at positions that fall in between the positions of the endless strings or belts of the second conveyor 10.

When the laminated dough piece 4 is at its depicted position on the movable part 21, the part moves from its downward orientation to its upward orientation.

The device finally comprises a (not depicted) adhesive-dispenser, for dispensing adhesive 14 on an exceeding edge of the separator sheet lagging the laminated dough piece in a transport direction.

## Claims

1. Device (1) for preparing a laminated dough piece (4) rolled up with separator sheet (5), comprising:
- a supplier (2) for supplying the laminated dough piece on separator sheet in a transport direction (3), the laminated dough piece having a length (6) in the transport direction and a width (7) perpendicular to the transport direction;
- a rolling chamber (8), contiguous to the supplier in the transport direction, **characterized in that**
- the supplier (2) is configured for transporting at least part of a laminated dough piece (4) on a separator sheet at least over a predetermined distance in a direction oriented upward, towards the rolling chamber (8), **characterized in that** the supplier comprises a movable part (21), movable between a downward orientation and an upward orientation, wherein the movable part (21) is a flap, hingable at its downstream end, and comprising an actuator for moving the movable part (21) between the downward orientation and the upward orientation, further comprising a controller for the actuator, and a sensor for generating a signal that represents a position of a laminated dough piece (4) on the supplier, wherein the controller is configured for moving the movable part (21) from the downward orientation to the upward orientation when the lagging edge of the laminated dough piece (4) has reached the movable part (21).

2. Device according to any claim 1, wherein the upward part is arranged at such distance from the rolling chamber (8) that at least a lagging edge of a laminated dough piece (4) is transported upward when at least the leading edge of the support is in the rolling chamber (8).

3. Device according to any of the preceding claims, wherein the distance from the location in the rolling chamber (8) where the separator sheet (5) or the laminated dough piece (4) is engaged to the downstream end of the upward part is less than 100 mm and preferably less than 25 mm, and / or the length of the upward part is preferably at least 100 mm.

4. Device according to any of the preceding claims, wherein the upward part is directly adjacent to the rolling chamber (8).

5. Device according to any of the preceding claims, wherein the rolling chamber (8) is defined by at least a subsequent first (9), a second (10) and a third (11) endless conveyor, each having a direction of conveyance perpendicular to the direction of conveyance of a previous conveyor, and the transport direction respectively, and together configured for leading an item supplied to the rolling chamber (8) around such that it encounters itself again.

6. Device according to claim 5, wherein the rolling chamber (8) further comprises vacuum roll.

7. Method for rolling up a laminated dough piece (4) with a separator sheet (5), comprising the steps of:
- supplying in a transport direction, a laminated dough piece (4) positioned on a separator sheet (5), the laminated dough piece (4) and the separator sheet (5) having a length and a width wherein a leading edge of the separator sheet (5) exceeds the laminated dough piece (4) at least at a first side, and
- rolling up the at least one side of the separator sheet (5) that exceeds the laminated dough piece (4), thus forming a cylinder of separator sheet, extending in a width direction of the laminated dough piece (4), and
- rolling up the separator sheet (5) with the laminated dough piece (4) around the cylinder wherein
- at least part of the transport direction is upward, **characterised in that** the method comprises transporting at least part of the laminated dough piece (4) with the separator sheet (5) on a the supplier (2) at least over a predetermined distance in a direction oriented upward, toward a rolling chamber for rolling up the separator sheet (5) with the laminated dough piece and moving a movable part (21) of the supplier (2) from a downward orientation to an upward orientation when a lagging edge of the laminated dough piece (4) has reached the movable part (21).

8. Method according to claim 7, wherein the part directly preceding the rolling up is the upward part.

9. Method according to claim 7 or 8, wherein a leading edge of the separator sheet (5) exceeds the laminated dough piece (4) at least at a first side, the method comprising rolling up the at least one side of the separator sheet (5) that exceeds the laminated dough piece (4), thus forming a cylinder of separator sheet (5), extending in a width direction of the laminated dough piece (4).

## Patentansprüche

1. Vorrichtung (1) zur Herstellung eines flach ausgerollten, mit einem Trennblatt (5) aufgerollten Teiglings (4), umfassend:
- einen Zuführer (2) zum Zuführen des flach ausgerollten Teiglings auf einem Trennblatt in einer Transportrichtung (3), wobei der flach ausgerollte Teigling eine Länge (6) in der Transportrichtung und eine Breite (7) senkrecht zur Transportrichtung aufweist;
- eine in Transportrichtung an den Zuführer angrenzende Rollkammer (8),
**dadurch gekennzeichnet, dass**
- der Zuführer (2) zum Transportieren mindestens eines Teils eines flach ausgerollten Teiglings (4) auf einem Trennblatt mindestens über eine vorbestimmte Strecke in einer aufwärts gerichteten Richtung zur Rollkammer (8) ausgelegt ist, **dadurch gekennzeichnet, dass** der Zuführer einen beweglichen Teil (21) umfasst, der zwischen einer Abwärtsausrichtung und einer Aufwärtsausrichtung beweglich ist, wobei der bewegliche Teil (21) eine Klappe ist, die an ihrem stromabwärtigen Ende angelenkt ist, und einen Aktuator zum Bewegen des beweglichen Teils (21) zwischen der Abwärtsausrichtung und der Aufwärtsausrichtung umfasst, ferner umfassend eine Steuerung für den Aktuator und einen Sensor zum Erzeugen eines Signals, das eine Position eines flach ausgerollten Teiglings (4) auf dem Zuführer darstellt, wobei die Steuerung zum Bewegen des beweglichen Teils (21) aus der Abwärtsausrichtung in die Aufwärtsausrichtung ausgelegt ist, wenn der hintere Rand des flach ausgerollten Teiglings (4) den beweglichen Teil (21) erreicht hat.

2. Vorrichtung nach einem von Anspruch 1, wobei der aufwärtige Teil in einem solchen Abstand von der Rollkammer (8) angeordnet ist, dass mindestens ein hinterer Rand eines flach ausgerollten Teiglings (4) aufwärts transportiert wird, wenn sich mindestens der vordere Rand der Unterlage in der Rollkammer (8) befindet.

3. Vorrichtung nach einem der vorhergehenden Ansprüche, wobei der Abstand von der Stelle in der Rollkammer (8), an der das Trennblatt (5) oder der flach ausgerollte Teigling (4) mit dem stromabwärtigen Ende des aufwärtigen Teils in Eingriff gelangt, kleiner als 100 mm und vorzugsweise kleiner als 25 mm ist, und/oder die Länge des aufwärtigen Teils vorzugsweise mindestens 100 mm beträgt.

4. Vorrichtung nach einem der vorhergehenden Ansprüche, wobei der aufwärtige Teil direkt benachbart zu der Rollkammer (8) ist.

5. Vorrichtung nach einem der vorhergehenden Ansprüche, wobei die Rollkammer (8) durch mindestens einen nachfolgenden ersten (9), einen zweiten (10) und einen dritten (11) Endlosförderer definiert ist, die jeweils eine Förderrichtung senkrecht zu der Förderrichtung eines vorherigen Förderers bzw. der Transportrichtung aufweisen und zusammen dazu ausgelegt sind, einen der Rollkammer (8) zugeführten Gegenstand so umzuleiten, dass er wieder auf sich selbst trifft.

6. Vorrichtung nach Anspruch 5, wobei die Rollkammer (8) ferner eine Vakuumwalze umfasst.

7. Verfahren zum Aufrollen eines flach ausgerollten Teiglings (4) mit einem Trennblatt (5), umfassend die Schritte:
- Zuführen eines flach ausgerollten Teiglings (4), der auf einem Trennblatt (5) positioniert ist, in einer Transportrichtung, wobei der flach ausgerollte Teigling (4) und das Trennblatt (5) eine Länge und eine Breite aufweisen, wobei ein vorderer Rand des Trennblatts (5) über den flach ausgerollten Teigling (4) mindestens an einer ersten Seite hinausragt, und
- Aufrollen der mindestens einen Seite des Trennblatts (5), die über den flach ausgerollten Teigling (4) hinausragt, um so einen Zylinder aus Trennblatt zu bilden, der sich in einer Breitenrichtung des flach ausgerollten Teiglings (4) erstreckt, und
- Aufrollen des Trennblatts (5) mit dem flach ausgerollten Teigling (4) um den Zylinder, wobei
- mindestens ein Teil der Transportrichtung aufwärts verläuft, **dadurch gekennzeichnet, dass** das Verfahren das Transportieren mindestens eines Teils des flach ausgerollten Teiglings (4) mit dem Trennblatt (5) auf dem Zuführer (2) mindestens über eine vorbestimmte Strecke in einer aufwärts gerichteten Richtung zu einer Rollkammer zum Aufrollen des Trennblatts (5) mit dem flach ausgerollten Teigling und zum Bewegen eines beweglichen Teils (21) des Zuführers (2) von einer Abwärtsausrichtung in eine Aufwärtsausrichtung, wenn ein hinterer Rand des flach ausgerollten Teiglings (4) den beweglichen Teil (21) erreicht hat, umfasst.

8. Verfahren nach Anspruch 7, wobei der dem Aufrollen unmittelbar vorangehende Teil der aufwärtige Teil ist.

9. Verfahren nach Anspruch 7 oder 8, wobei ein vorderer Rand des Trennblatts (5) mindestens an einer ersten Seite über den flach ausgerollten Teigling (4) hinausragt, wobei das Verfahren das Aufrollen der mindestens einen Seite des Trennblatts (5) umfasst, die über den flach ausgerollten Teigling (4) hinausragt, um so einen Zylinder aus Trennblatt (5) zu bilden, der sich in einer Breitenrichtung des flach ausgerollten Teiglings (4) erstreckt.

## Revendications

1. Dispositif (1) de préparation d'un morceau de pâte feuilletée (4) enroulé avec une feuille de séparation (5), comprenant :
- un dispositif d'apport (2) pour apporter le morceau de pâte feuilletée sur une feuille de séparation dans un sens de transport (3), le morceau de pâte feuilletée ayant une longueur (6) dans le sens de transport et une largeur (7) perpendiculaire au sens de transport ;
- une chambre d'enroulement (8), attenante au dispositif d'apport dans le sens de transport,
**caractérisé en ce que**
- le dispositif d'apport (2) est conçu pour transporter au moins une partie d'un morceau de pâte feuilletée (4) sur une feuille de séparation, au moins sur une distance prédéterminée, dans un sens orienté vers le haut, vers la chambre d'enroulement (8), **caractérisé en ce que** le dispositif d'apport comprend une partie mobile (21), mobile entre une orientation vers le bas et une orientation vers le haut, dans lequel la partie mobile (21) est un volet, pouvant être articulé au niveau de son extrémité aval, et comprenant un actionneur pour déplacer la partie mobile (21) entre l'orientation vers le bas et l'orientation vers le haut, comprenant en outre un contrôleur pour l'actionneur et un capteur pour générer un signal qui représente une position d'un morceau de pâte feuilletée (4) sur le dispositif d'apport, dans lequel le contrôleur est configuré pour déplacer la partie mobile (21), de l'orientation vers le bas vers l'orientation vers le haut lorsque le bord arrière du morceau de pâte feuilletée (4) a atteint la partie mobile (21).

2. Dispositif selon l'une quelconque de la revendication 1, dans lequel la partie vers le haut est agencée à une distance de la chambre d'enroulement (8) telle qu'au moins un bord arrière d'un morceau de pâte feuilletée (4) est transporté vers le haut lorsqu'au moins le bord avant du support est dans la chambre d'enroulement (8).

3. Dispositif selon l'une quelconque des revendications précédentes, dans lequel la distance entre l'emplacement dans la chambre d'enroulement (8) où est engagé la feuille de séparation (5) ou le morceau de pâte feuilletée (4) et l'extrémité aval de la partie vers le haut est inférieure à 100 mm et, de préférence, inférieure à 25 mm et/ou la longueur de la partie vers le haut est de préférence d'au moins 100 mm.

4. Dispositif selon l'une quelconque des revendications précédentes, dans lequel la partie vers le haut est directement adjacente à la chambre d'enroulement (8).

5. Dispositif selon l'une quelconque des revendications précédentes, dans lequel la chambre d'enroulement (8) est définie par au moins un premier (9), un deuxième (10) et un troisième (11) transporteur sans fin à la suite, chacun ayant un sens de transport perpendiculaire respectivement au sens de transport d'un convoyeur précédent et au sens de transport et étant ensemble conçus pour entraîner un article apporté à la chambre d'enroulement (8) de manière circulaire, de sorte qu'il se rencontre lui-même de nouveau.

6. Dispositif selon la revendication 5, dans lequel la chambre d'enroulement (8) comprend en outre un rouleau à vide.

7. Procédé d'enroulement d'un morceau de pâte feuilletée (4) avec une feuille de séparation (5), comprenant les étapes de :
- fourniture, dans un sens de transport, d'un morceau de pâte feuilletée (4) positionné sur une feuille de séparation (5), le morceau de pâte feuilletée (4) et la feuille de séparation (5) ayant une longueur et une largeur telles qu'un bord avant de la feuille de séparation (5) dépasse du morceau de pâte feuilletée (4) au moins sur un premier côté et
- enroulement du au moins un côté de la feuille de séparation (5) qui dépasse du morceau de pâte feuilletée (4), formant ainsi un cylindre de feuille de séparation, s'étendant dans une direction de largeur du morceau de pâte feuilletée (4) et
- enroulement de la feuille de séparation (5) avec le morceau de pâte feuilletée (4) autour du cylindre, dans lequel
- au moins une partie du sens de transport est vers le haut, **caractérisé en ce que** le procédé comprend le transport d'au moins une partie du morceau de pâte feuilletée (4) avec la feuille de séparation (5) sur le dispositif d'apport (2) au moins sur une distance prédéterminée dans un sens orienté vers le haut, vers une chambre d'enroulement pour enrouler la feuille de séparation (5) avec le morceau de pâte feuilletée et déplacer une partie mobile (21) du dispositif d'apport (2), d'une orientation vers le bas vers une orientation vers le haut lorsqu'un bord arrière du morceau de pâte feuilletée (4) a atteint la partie mobile (21).

8. Procédé selon la revendication 7, dans lequel la partie précédant directement l'enroulement est la partie vers le haut.

9. Procédé selon la revendication 7 ou 8, dans lequel un bord avant de la feuille de séparation (5) dépasse du morceau de pâte feuilletée (4) au moins sur un premier côté, le procédé comprenant l'enroulement du au moins un côté de la feuille de séparation (5) qui dépasse du morceau de pâte feuilletée (4), formant ainsi un cylindre de feuille de séparation (5), s'étendant dans la direction de la largeur du morceau de pâte feuilletée (4).
